Europäisches Patentamt

European Patent Office

Office européen des brevets

⑩

(11) Publication number: **0 202 798**
**B1**

# EUROPEAN PATENT SPECIFICATION

(12)

(45) Date of publication of patent specification: **04.04.90**

(21) Application number: **86303273.6**

(22) Date of filing: **30.04.86**

(51) Int. Cl.⁵: **F 16 L 37/28**

(54) **A fluid coupling device.**

(30) Priority: **10.05.85 FR 8507102**
**04.03.86 US 835932**

(43) Date of publication of application:
**26.11.86 Bulletin 86/48**

(45) Publication of the grant of the patent:
**04.04.90 Bulletin 90/14**

(84) Designated Contracting States:
**DE FR GB IT SE**

(56) References cited:
**FR-A- 876 521**
**US-A-3 159 180**
**US-A-3 276 474**

(73) Proprietor: **Frémy, Raoul**
**Villa Emilia 17, Rue Cécile Vallet**
**F-92340 Bourg La Reine (FR)**

(72) Inventor: **Frémy, Raoul**
**Villa Emilia 17, Rue Cécile Vallet**
**F-92340 Bourg La Reine (FR)**

(74) Representative: **Taylor, Derek George et al**
**Mathisen, Macara & Co. The Coach House 6-8**
**Swakeleys Road**
**Ickenham Uxbridge UB10 8BZ (GB)**

Courier Press, Leamington Spa, England.

## Description

The present invention relates generally to the field of fluid coupling devices having separable first and second sections, and, more particularly, to an automatically-operated self-sealing zero-spillage fluid coupling device in which a pair of interfitting valve elements are rotated sequentially from flow-preventing positions to flow-permitting positions upon relative axial movement of one section toward the other.

Fluid coupling devices are, of course, broadly known. It is also known to provide such coupling devices with a quick-disconnect mechanism to facilitate engagement and separation of the male section and the female section.

It is also known to provide such coupling devices with at least one rotary valve element that moves angularly from a flow-preventing position to a flow-permitting position upon axial insertion of one coupling section into the other, and vice versa This type of coupling device is called "self-sealing" because such valve elements automatically block the flow passage when the sections are separated from one another. An example of such a device is disclosed in US-A-3276474.

It is also known to provide a "zero-spillage" coupling device. This type of device has two interfitting rotary valve elements, usually in the form of ball valves. One of the ball valves has a concave recess extending radially inwardly from its outer surface, which recess is adapted to receive a convex portion of the other ball valve when the sections are joined together. An example of this type of device is disclosed in US-A-3159180. However, to establish a flow passage through the connected coupling device, the ball valves are rotated sequentially by manual rotation of an external actuator ring after the sections have been moved axially into engagement.

With the aim of improving this latter type of device, according to the invention there is provided a fluid coupling device comprising:

a first section having a first housing and a first valve element mounted within said first housing so that the first valve element is rotatable between a flow-preventing position and a flow-permitting position;

a second section having a second housing and a second valve element mounted within said second housing so that the second valve element is rotatable between a flow-preventing position and a flow-permitting position;

said first valve element having a recess which is arranged to receive a portion of the second valve element when said first and second valve elements are in their flow-preventing positions and said first and second sections are moved linearly into engagement with each other;

means for rotating said first and second valve elements to their flow-permitting positions to establish a full flow passage through said device as said first and second sections are moved to a fully coupled position; and

means for ensuring that said second valve element rotates to its flow-permitting position before said first valve element;

characterized in that said first valve element is movable linearly relative to said first housing and co-operates therewith so that said first valve element is rotated by said relative linear movement, said first valve element being biased towards its flow-preventing position by a first spring acting between said first housing and said first valve element;

said second valve element is movable linearly relative to said second housing and co-operates therewith so that said second valve element is rotated by said relative linear movement, said second valve element being biased towards its flow-preventing position by a second spring acting between said second housing and said second valve element;

and said first and second sections are movable linearly to the fully coupled position through successive first, second, and third relative positions of said first and second housings, wherein said first and second valve elements are in engagement with each other in their flow-preventing positions in said first relative position of said housings, said second valve element is rotated to its flow-permitting position upon movement of said sections to the second relative position of said housings, and the first valve element is rotated to its flow-permitting position upon movement of said sections to the third relative position of said housings.

Embodiments of the invention will now be particularly described, by way of example, with reference to the accompanying drawings in which:

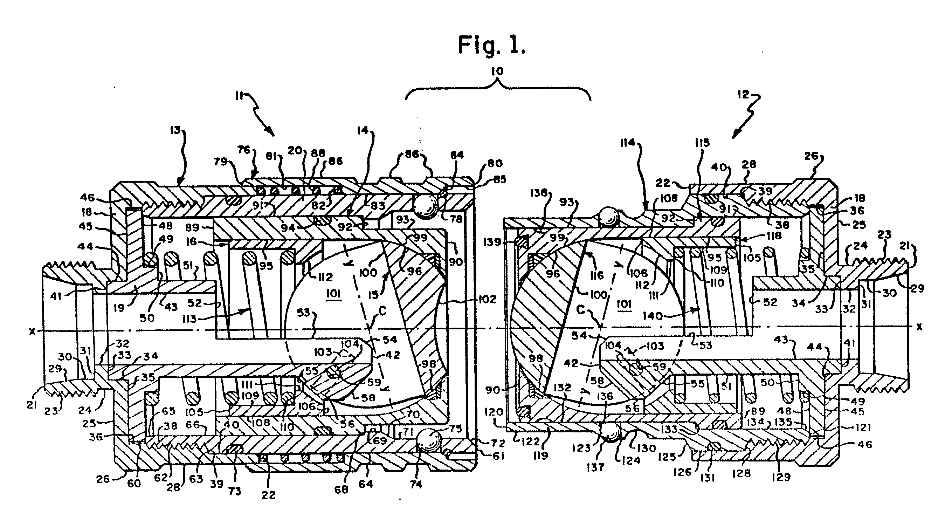

Figure 1 is a fragmentary longitudinal vertical sectional view of a first embodiment of the fluid coupling device, this view showing the axially-aligned male and female sections as being separated from one another and showing the two valve elements as being in their flow-preventing positions;

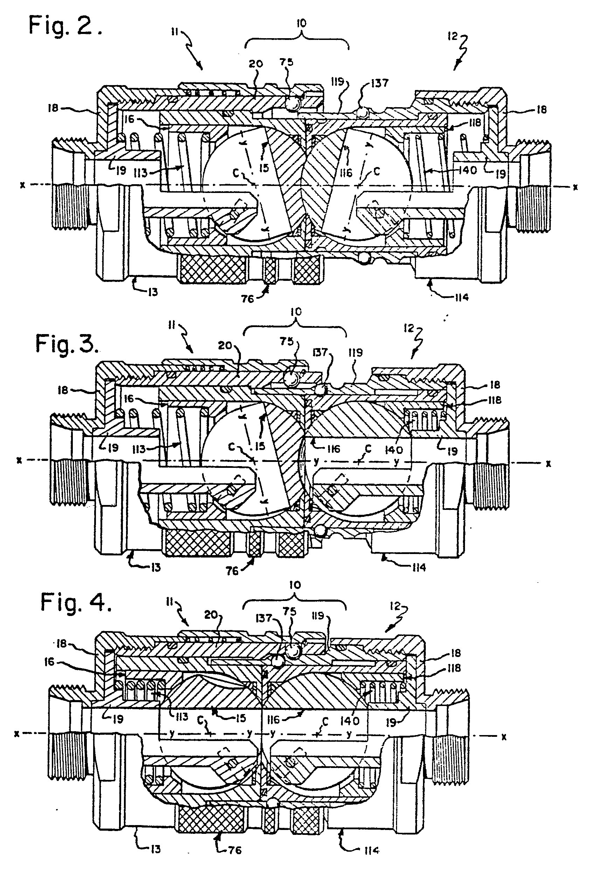

Figure 2 is a fragmentary longitudinsl vertical sectional view of the coupling device shown in Figure 1, but showing the male and female sections as having been brought together such that the housings are in a first relative position, this view continuing to show the respective valve elements as being in their flow-preventing positions;

Figure 3 is a fragmentary longitudinal vertical sectional view thereof, generally similar to the view of Figure 2, but showing the male section as having been further inserted into the female section such that the housings are in a second relative position, this view also showing the male valve element as having been rotated to its flow-permitting position while the female valve element is still in its flow-preventing position;

Figure 4 is a fragmentary longitudinal vertical sectional view thereof, generally similar to the view of Figure 3, but showing the male section as having been still further inserted into the female section such that the housings are in a third relative position, and showing the female section valve element as also having been rotated to its flow-permitting position so as to establish the full flow passage through the connected coupling device;

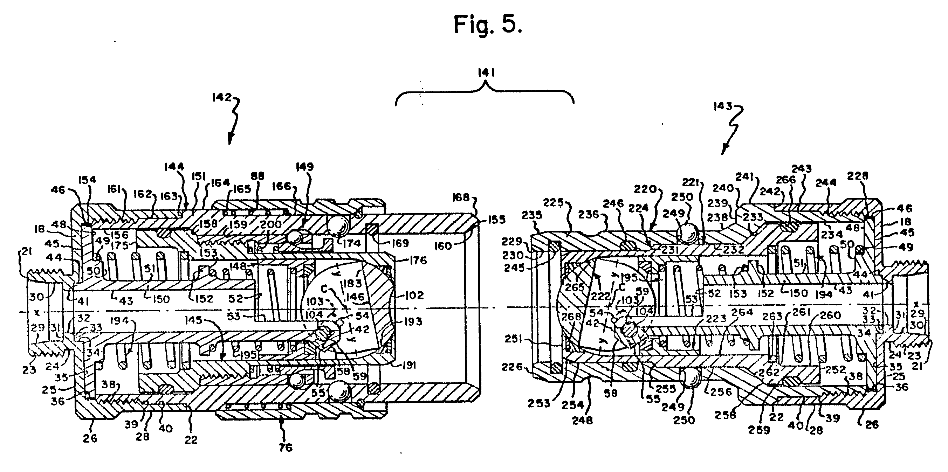

Figure 5 is a fragmentary longitudinal vertical sectional view of a second embodiment of the fluid coupling device, this view showing the axially-aligned male and female sections as being separated from one another, and showing the two valve elements as being in their flow-preventing positions;

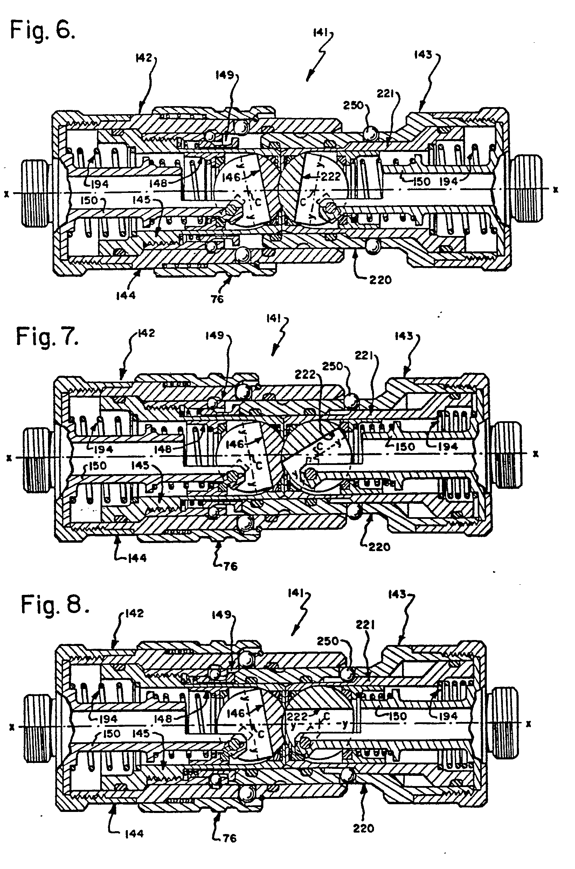

Fig. 6 is a fragmentary longitudinal vertical sectional view of the coupling device shown in Fig. 5, but showing the male and female sections as having been brought together such that the housings are in a first relative position, this view continuing to show the respective valve elements as being in their flow-preventing positions;

Fig. 7 is a fragmentary longitudinal vertical sectional view thereof, generally similar to the view of Fig. 6, but showing the male section as having been further inserted into the female section, and showing the male valve element as having been rotated so as to approach its flow-permitting position while the female valve element is still in its flow-preventing position;

Fig. 8 is a fragmentary longitudinal vertical sectional view thereof, generally similar to the view of Fig. 7, but showing the male section as having been further inserted into the female section such that the housings are in a second relative position, this view also showing the balls of the first and second interlock mechanisms as having moved radially inwardly, and also showing the male valve element as having been further rotated to its flow-permitting position while the female valve element remains in its flow-preventing position;

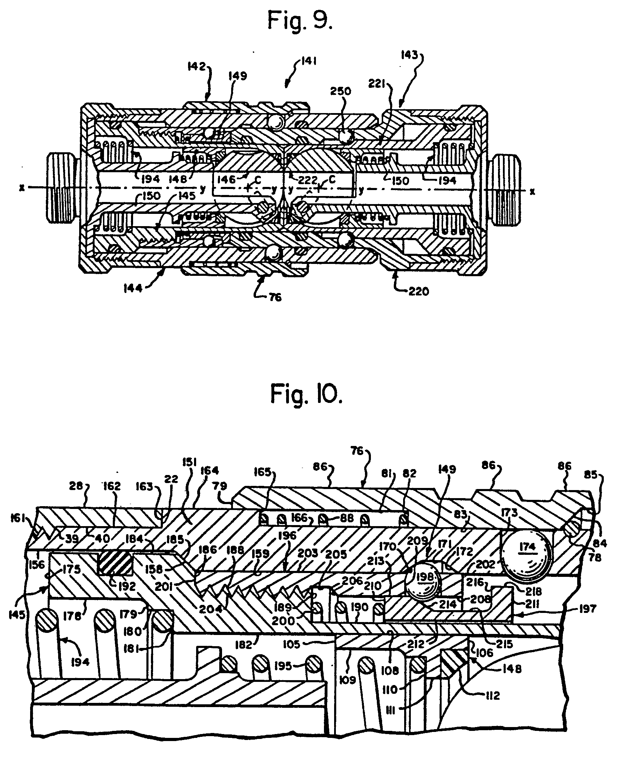

Fig. 9 is a fragmentary longitudinal vertical sectional view thereof, generally similar to the view of Fig. 8, but showing the male section as having been still further inserted into the female section such that the housings are in a third relative position, and showing the female valve element as also having been rotated to its flow-permitting position so as to establish the full flow passage through the connected coupling device, and

Fig. 10 is a further enlarged fragmentary detail view of the first interlock mechanism, and surrounding structure, in the female section, in the condition shown in Fig. 1.

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. The drawings should generally be regarded as being to scale, unless otherwise indicated. As used in the following description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Unless otherwise indicated, the terms "inwardly" and "outwardly" refer to the orientation of a surface relative to its axis of elongation, or axis of rotation, as appropriate.

First Embodiment (Figs. 1-4)

Referring now to Fig. 1, a first embodiment of the coupling device, generally indicated at 10, is shown as broadly including a leftward female section 11 and a rightward male section 12. In Fig. 1, these two sections are shown as being axially-aligned, but physically separated from one another.

Structure of Female Section 11

The leftward female section 11 is shown as having a horizontally-elongate tubular housing 13, a seat member 14 mounted within the housing for leftward and rightward sliding movement therealong, a rotary valve element 15 arranged within the housing and biased to engage the seat member, and a bearing member 16 continuously urging the valve element to move rightwardly into fluid-tight sealed engagement with the seat member.

Housing 13 is shown of being of three-piece construction, and broadly includes a left part 18, an intermediate post member 19, and a right part 20.

The housing left part 18 is shown as being a specially-configured horizontally-elongate tubular member having a leftward fitting portion, an outwardly-extending intermediate portion and a rightward tubular portion, all generated about horizontal axis x-x. The left part has annular vertical left and right end faces 21, 22, respectively. The outer surface of housing left part 18 sequentially includes (from left to right in Fig. 1): an externally-threaded portion 23 extending rightwardly from left end face 21; an outwardly-facing horizontal cylindrical surface 24; a leftwardly-facing annular vertical surface 25; an outwardly-facing polygonal surface including a plurality of flats, severally indicated at 26; and an outwardly-facing horizontal cylindrical surface 28 continuing rightwardly therefrom to join right end face 22. The inner surface of housing left part 18 sequentially includes (from left to right in Fig. 1): an inwardly- and leftwardly-facing frustoconical surface 29 extending rightwardly from left end face 21; an inwardly-facing horizontal cylindrical surface 30; a leftwardly-facing annular vertical surface 31; an inwardly-facing horizontal cylindrical surface 32; a rightwardly-facing annular vertical surface 33; an inwardly-facing horizontal cylindrical surface 34; a rightwardly-facing annular vertical surface 35; an inwardly-facing horizontal cylindrical surface 36; an internally-threaded portion 38; a rightwardly-facing annular vertical surface 39; and an inwardly-facing horizontal cylindrical surface 40 continuing rightwardly therefrom to join right end face 22.

The post member 19 is depicted as being a horizontally-elongate specially-configured tubular member, also generated about horizontal axis x-x. Specifically, post member 19 has an annular vertical left face 41, and a somewhat U-shaped vertical right face 42. A through-bore, bounded by inwardly-facing horizontal cylindrical surface 43, extends between the left and right end faces 41, 42. The outer surface of this post member sequentially includes (from left to right in Fig. 1): an outwardly-facing horizontal cylindrical surface 44; a leftwardly-facing annular vertical surface 45; an outwardly-facing horizontal cylindrical surface 46; a rightwardly-facing annular vertical surface 48; an outwardly-facing horizontal cylindrical surface 49; a rightwardly-facing annular vertical surface 50; and an outwardly-facing horizontal cylindrical surface 51 extending rightwardly therefrom. A rightward upper generally-semicylindrical portion of the post member is shown as having been removed. Thus, a rightwardly-facing vertical surface 52, which has a somewhat inverted U-shaped appearance (not shown), extends downwardly from an intermediate portion of post surface 51 for a distance greater than the radius of surface 51, and communicates with two upwardly-facing planar horizontal surfaces, one of which is indicated at 53, which extend rightwardly therefrom. A pair of upwardly- and rightwardly-facing inclined surfaces, one of which is indicated at 54, join surfaces 53 with right end face 42. A radial lug is shown as extending downwardly from the underside of the right margin of post surface 51. Specifically, this lug is shown as being sequentially bounded by (from left to right in Fig. 1): an arcuate segment of an outwardly- and leftwardly-facing frusto-conical surface 55 extending rightwardly from surface 51; an arcuate segment of an outwardly-facing horizontal cylindrical surface 56; and an arcuate segment of an outwardly- and rightwardly-facing frusto-conical surface 58 which continues rightwardly to join right end face 42. The longitudinal side surfaces (not shown) of the post member lug are milled flat and vertical, so that the right marginal end portion of the post may enter the valve element. A horizontal hole 59 extends transversely through the post member lug portion. The post member 19 is positioned such that post member surfaces 41, 45 are arranged to abut housing left part surfaces 33, 35, respectively.

The housing right part 20 is shown as being a horizontally-elongate tubular member having annular vertical left and right end faces 60, 61, respectively. The outer surface of housing right part 20 sequentially includes (from left to right in Fig. 1): an externally-threaded portion 62 extending rightwardly from left end face 60; a leftwardly-facing annular vertical surface 63; and an outwardly-facing horizontal cylindrical surface 64 continuing rightwardly therefrom to join right end face 61. The housing right part 20 has a stepped axial through-bore, which is sequentially bounded by (from left to right in Fig. 1): an inwardly- and leftwardly-facing frusto-conical surface 65 extending rightwardly from left end face 60; an inwardly-facing horizontal cylindrical surface 66; a leftwardly-facing annular vertical abutment surface 68; an inwardly-facing horizontal cylindrical surface 69; an inwardly- and rightwardly-facing frusto-conical surface 70; an inwardly-facing horizontal cylindrical surface 71; and an inwardly- and rightwardly-facing frusto-conical surface 72 continuing therefrom to join right end face 61.

The housing right part 20 is threaded into engagement with the housing left part 18, with the outermost margin of the post member being captured between facing surfaces 35, 60. An annular groove is shown as extending radially into the housing right part from surface 64 to receive and accommodate an O-ring 73, which engages left part surface 40 and seals the joint between the housing left and right parts. A plurality of radial holes, one of which is indicated at 74, are provided through the right marginal end portion of the housing right part, and severally communicate outer surface 64 with inner surface 71. Each of these radial holes 74 has an in-turned ball-retaining inner end portion, and accommodates the presence of a ball, one of which is indicated at 75, of the quick-disconnect mechanism.

The quick-disconnect mechanism also includes a tubular sleeve 76 surrounding the right marginal end portion of the assembled housing, and biased to move rightwardly against an annular retaining ring 78, which is received in a suitable groove extending radially into the housing from surface 64 thereof. Sleeve 76 is shown as having annular vertical left and right end faces 79, 80, respectively. The sleeve has an inner surface which sequentially includes (from left to right in Fig. 1): an inwardly-facing horizontal cylindrical surface 81 extending rightwardly from left end face 79; a leftwardly-facing annular vertical abutment surface 82; an inwardly-facing horizontal cylindrical surface 83; an inwardly- and rightwardly-facing frusto-conical surface 84; and an inwardly-facing horizontal cylindrical surface 85 continuing rightwardly therefrom to join right end face 80. The outer surface of this sleeve is shown as having three axially-spaced knurled portions, severally indicated at 86. A coil spring 88 has its left end arranged to bear against housing surface 22, and has its right end arranged to bear against sleeve surface 82. Spring 88 is compressed, and continuously biases the sleeve 76 to move rightwardly relative to the housing until sleeve surface 84 abuts retaining ring 78. However, an operator may grasp sleeve 76, and displace it leftwardly relative to the housing (i.e., from the position shown in Fig. 2 to the position shown in Fig. 3) so that balls 75 may move radially outwardly toward larger-diameter sleeve surface 85.

The seat member 14 is shown as being a horizontally-elongate tubular member slidably mounted within the housing, and has annular vertical left and right end faces 89,90, respectively. The stepped outer surface of the seat member sequentially includes (from left to right in Fig. 1): an outwardly-facing horizontal cylindrical surface 91 extending rightwardly from left end face 89 and arranged to slidably engage housing surface 66; a rightwardly-facing annular vertical abutment surface 92 arranged to be moved toward and away from housing abutment surface 68; and an outwardly-facing horizontal cylindrical surface 93 continuing rightwardly therefrom to join right end face 90. An annular groove extends radially into the seat member from surface 91 to receive and accommodate an O-ring 94, which seals the sliding joint between the seat member and the housing. The inner surface of the seat member is shown as including an inwardly-facing horizontal cylindrical surface 95 extending rightwardly from left end face 89, and an inwardly- and leftwardly-facing annular concave spherically-segmented surface 96 which tangentially joins surface 95 and continues rightwardly and inwardly therefrom to join right end face 90. An annular groove extends into the seat member from surface 96 to receive and accommodate a suitable seal member 98, which sealingly engages the outer surface of the valve element. This seal member is shown as including a low-friction ring, preferably formed of polyetrafluoro-ethylene or the like, biased to engage the valve element outer surface.

The rotary valve element 15 is shown as being in the form of a spherical, ball, and has an outwardly-facing spherical surface 99 generated about a center C. Valve element 15 is further shown as having a tunnel-shaped through-slot bounded by a diametrical semicylindrical surface 100 and two planar parallel surfaces, one of which is indicated at 101, extending tangentially therefrom to join ball outer surface 99. Semicylindrical surface 100 is shown as being generated about axis y-y, which intersects the center C of the ball. A concave spherically-segmented recess 102 is shown as extending into valve element 15 from its outer surface 99 to receive and accommodate a complimentarily-configured convex portion of the male section valve element when the two coupling sections are brought together, as shown in Figs. 2 and 3. Moreover, two rectangular slots, one of which is shown in phantom and indicated at 103, extend radially into the valve element from its outer surface 99. These two slots receive and accommodate the marginal end portions of a pivot pin 104 which is arranged in post member transverse hole 59. Thus, the axis of pin 104 is eccentric to the center of valve element 15. These slots 103 permit radial inward and outward movement of the pin relative to the valve element when the valve element moves axially relative to the housing, and impart rotational movement to the valve element.

The bearing number 16 is shown as being a horizontally-elongate tubular member having annular vertical left and right end faces 105, 106, respectively, and an outwardly-facing horizontal cylindrical surface 108 extending therebetween. Surface 108 is arranged to slidably engage seat member surface 95. The inner surface of the bearing member sequentially includes (from left to right in Fig. 1): an inwardly-facing horizontal cylindrical surface 109 extending rightwardly from left end face 105; a leftwardly-facing annular vertical surface 110; an inwardly-facing horizontal cylindrical surface 111; and an annular inwardly- and rightwardly-facing spherically-segmented surface 112 arranged to bear against the valve element outer surface 99. Bearing member 16 is biased to move rightwardly into continuous engagement with the valve element by a coil spring 113. The left end of spring 113 surrounds post member surface 49 and is arranged to bear against post surface 48, while the right end of this spring acts against bearing member surface 110. Thus, spring 113 continuously urges the bearing member, the valve element and the seat member, to move rightwardly relative to the housing, until seat member surface 92 abuts housing surface 68, as shown in Figs. 1-3. At the same time, the seat member, the valve element, and the bearing member may be selectively moved leftwardly-relative to the housing, by compliant compression of spring 113, as shown in Fig. 4. Such axial motion will cause the valve element to rotate about its center. When the seat member is in its extreme rightward position, as shown in Figs. 1-3, valve element 15 is in its flow-preventing position, and concave recess 102 faces rightwardly to receive the convex portion of the male valve element. However, the seat member may be displaced leftwardly relative to the housing to rotate the valve element to its flow-permitting position, as shown in Fig. 4.

Structure of Male Section 12

Still referring principally to Fig. 1, the rightward male section is also shown as having a horizontally-elongate tubular housing 114, a seat member 115 mounted within the housing for leftward and rightward axial sliding movement relative thereto, a rotary valve element 116 arranged within the housing and continuously engaging tne seat member, and a bearing member 118 biased to move leftwardly into continuous engagement with the valve element.

The male housing 114 is also shown as being of three-piece construction, and broadly includes a right part, an intermediate post member, and a left part 119. The male housing right part and post member are structurally similar to the female housing left part and post member, respectively, previously described. Hence, the same reference numeral has been used to identify the corresponding parts, portions or surfaces of the male housing right part and post member, it being understood that these two elements of the male section are arranged as mirror images of the corresponding structure of the female section.

The male housing left part 119 is shown as having annular vertical left and right end faces 120, 121, respectively. The outer surface of housing part 119 sequentially includes (from left to right in Fig. 1): an outwardly-facing horizontal cylindrical surface 122 extending rightwardly from left end face 120; an outwardly- and leftwardly-facing frusto-conical surface 123; an outwardly-facing horizontal cylindrical surface 124; an outwardlyand leftwardly-facing frusto-conical surface 125; an outwardly-facing horizontal cylindrical surface 126; a rightwardly-facing annularvertical surface 128, an externally-threaded portion 129 continuing rightwardly therefrom to join right end face 121. An annular groove 130, having a somewhat U-shaped transverse cross-section, extends radially into housing part 119 from outer surface 124. Another annular groove is shown as extending into housing part 119 from surface 126 to receive and accommodate an O-ring 131, which sealingly engages surface 40 and seals the sliding joint between the male housing left and right parts. The inner surface of housing left part 119 sequentially includes (from left to right in Fig. 1): an inwardly-facing horizontal cylindrical surface 132 extending rightwardly from left endface 120; a rightwardly-facing annular vertical surface 133, and an inwardly-facing horizontal cylindrical surface 134; and an inwardly and rightwardly-facing frusto-conical surface 135 continuing therefrom to join right end face 121. A plurality of radial through-holes, one of which is indicated at 136, communicate inner surface 132 with outer surfaces 123,124, to receive and accommodate a like plurality of balls, one of which is indicated at 137. The male section housing is created by assembling right part 18, post member 19 and left part 119 together, as shown. Here again, the outer margin of the post member flange is captured between the left and right housing parts.

Seat member 115 is generally similar to seat member 14, although depicted as a mirror image of same. Since the structure of seat member 115 is substantially the same as the structure of seat member 14, the same reference numerals have been applied to the male seat member, except as mentioned below. The principal differences between the male and female seat members lie in the relative lengths of surfaces 91, 93, the radial dimension between surfaces 91, 95, and the diameters of surfaces 91, 93. An annular groove 138, having a somewhat U-shaped transverse cross-section, is shown as extending radially into the male seat member 115 from surface 93. Another annular groove extends rightwardly into seat member 115 from its left end face to receive and accommodate an O-ring or seal member 139. Thus, when the two housing sections are moved toward one another, seal member 139 engages female seat member end face 90 to provide a sealed joint between the male and female seat members.

Rotary valve element 116 is substantially the same as valve element 15, although the concave recess 102 has been omitted. Here again, while the male valve element 116 is depicted as being a mirror image of the female valve element 15, the same reference numerals have been used to identify like portions, elements or surfaces of the male valve element.

The male bearing member 118 is also shown as being substantially a mirror image of female bearing member 16. Hence, the same reference numerals have been used to identify the corresponding parts, portions or surfaces of the male bearing member.

A coil spring 140 is arranged to act between the male housing and the bearing member, and continuously urges male bearing member 118 to move leftwardly against the outer surface of valve element 116. The riglht end of the spring bears against male housing surface 48, and the left end of the spring bears against seat member surface 110. Thus, spring 140 continuously urges bearing member 118, ball 116 and seat member 115, to move leftwardly relative to male housing 114 until seat member surface 92 engages housing surface 133. However, female spring 113 exerts a substantially greater force on female valve element 15 than male spring 140 exerts on male valve element 116. This differential of such opposing forces enables the proper sequence of valve element rotation in the first embodiment.

Operation of First Embodiment

The operation of the first embodiment is comparatively illustrated in Figs. 2-4.

Assume that the male and female coupling sections are initially separated, as shown in Fig. 1. From this initial condition, the male section may be moved axially leftwardly to initially engage the female section, as shown in Fig. 2. In this condition, the left margin of male housing surface 132 will slidably overlap the right margin of female seat member surface 93, and the right face of the female seat member will abut the left face of the male seat member, with O-ring 139 sealing the joint therebetween. Female spring 113 causes seat member surface 92 to abut female housing surface 68. Similarly, male spring 140 causes seat member surface 92 to abut male housing surface 133. Thus, in the condition shown in Fig. 2, the male section is axially aligned with and contacts the female section, but both rotary valve elements remain in their respective flow-preventing positions. The structure shown in Fig. 2 illustrates a first relative position between the male and female housings.

Thereafter, the male section may be axially inserted into the female section to the intermediate position shown in Fig. 3, which represents a second relative position between the male and female housings. In Fig. 3, the left margin of male housing surface 132 is shown as encircling a greater portion of female bearing member surface 93. At the same time, since spring 113 exerts a greater force on female valve element 15 than opposing spring 140 exerts on male element 116, spring 140 will be compressed when the male housing is further inserted into the female housing. Hence, in Fig. 3, the male seat member, valve element and bearing member are shown as having been displaced rightwardly relative to the male housing. In this second relative position, balls 137 are shown as having been moved radially inwardly and received in now radially-aligned groove 138, and male bearing member right end face 105 abuts male housing surface 48. Moreover, because of such axial displacement, the male valve element 116 is depicted as having been rotated in a clockwise direction so that the slot axis y-y thereof is coincident with housing horizontal axis x-x. Hence, male valve element 116 is now in its flow-permitting position. At the same time, the greater force exerted by female spring 113 has precluded the female seat member, valve element and bearing member, from moving leftwardly relative to the female housing. Hence, the female valve element 15 has not moved axially nor rotated relative to the female housing, and continues to be in its flow-preventing position when the housings are in the second relative position shown in Fig. 3.

Fig. 4 illustrates a third relative position of the housings resulting from still further axial insertion of the male section into the female section. Such further insertion is permitted because balls 137 moved radially inwardly and were received in male section groove 138. Thus, as the male section is inserted further into the female section, (i.e., from the position shown in Fig. 3 to the position shown in Fig. 4), the left end face 120 of the male section bearing member, now abutting male housing surface 48, displaces the female bearing member leftwardly relative to the female housing. Hence, upon such further insertion of the male section, the female bearing member, rotary valve element and bearing member, are displaced leftwardly relative to the female housing, through compliant compression of female spring 113. Such axial displacement cause the female valve element to rotate counterclockwise from its flow-preventing position (as shown in Fig. 3) to its flow-permitting position (as shown in Fig. 4). In this flow-permitting position, the axis y—y of female valve element through-slot is coincident with horizontal female housing axis x—x. Such rotation of the female valve element is accommodated because the male valve element has been previously rotated to its flow-permitting position. Hence, a portion of the outer spherical surface 99 of the female valve element may actually enter the open left mouth of the previously-rotated male valve element, to permit such rotation of the female valve element.

When the coupling sections are in the condition shown in Fig. 4, sleeve 76 may be released to drive balls 75 radially inwardly into locking engagement with male housing groove 130.

To separate the two coupling sections, the foregoing sequence is reversed. Specifically, referring to Fig. 4, the sleeve member 76 is first moved leftwardly relative to the female housing, so as to permit balls 75 to move radially outwardly. Thereafter, the male section may be moved axially rightwardly relative to the female section. Such relative motion permits stiffer female spring 113 to expand, causing female valve element 15 to rotate from its flow-permitting position to its flow-preventing position, as shown in Fig. 3. At this point, sleeve 76 may be released. Thereafter, the male section may be moved further rightwardly relative to the female section from the second relative position shown in Fig. 3 to the first relative position shown in Fig. 2. During such further motion, male section spring 140 expands, causing the male valve element to now rotate from its flow-permitting position to its flow-preventing position, as shown in Fig. 2. Thereafter, the male and female sections may be physically separated from one another.

Second Embodiment (Figs. 5-10)

Referring now to Fig. 5, a second embodiment of the coupling device, generally indicated at 141, is again shown as broadly including a leftward female section 142 and a rightward male section 143. Here again, these two sections are shown as being axially-aligned, but physically separated from one another in Fig. 5.

Structure of Female Section 142

The leftward female section 142 is again shown as having a horizontally-elongate tubular housing 144, a seat member 145 mounted within the housing for leftward and rightward sliding movement therealong, a rotary valve element 146 arranged within the housing and biased to engage the seat member, and a bearing member 148 continuously urging the valve element to move rightwardly into fluid-tight sealed engagement with the seat member. However, in the second embodiment, the female section is shown as additionally including a first interlock mechanism 149.

As in the first embodiment, housing 144 is again shown as being of three-piece construction, and broadly includes a left part 18, an intermediate post member 150, and a right part 151.

The housing left part 18 is substantially the same as that in the first embodiment. Hence, the same reference numerals have been used to identify like portions, elements and surfaces, previously described.

The post member 150 is substantially the same as the post member in the first embodiment, except as described below. Hence, the same reference numerals have been used to identify like portions, elements and surfaces of post member 150. However, a radial flange 152 is shown as extending outwardly from post outer surface 51. This radial flange has a rightwardly facing annular vertical surface 153. Moreover, in the second embodiment, the transverse hole 59 intersects through-bore surface 43. However, pivot pin 104 is somewhat saddle-shaped, and has a concave central portion (not shown) complimentarily configured to the shape of the post through-bore surface 43.

The housing right part 151 is shown as being a horizontally-elongate tubular member having annular vertical left and right end faces 154, 155, respectively. Housing right part 151 has a stepped axial through-bore which is sequentially bounded by (from left to right in Figs. 5 and 10): an inwardly-facing horizontal cylindrical surface 156 extending rightwardly from left end face 154; an inwardly- and leftwardly-facing frusto-conical surface 158; an inwardly-facing horizontal cylindrical surface 159; and an inwardly- and rightwardly-facing frusto-conical surface 160 continuing rightwardly therefrom to join right end face 155. The housing right part 151 has an outer surface which sequentially includes (from left to right in Fig. 5): an externally-threaded portion 161 extending rightwardly from left end face 154; an outwardly-facing horizontal cylindrical surface 162; a leftwardly-facing annular vertical surface 163; an outwardly-facing horizontal cylindrical surface 164; a rightwardly-facing annular vertical surface 165; an outwardly-facing cylindrical surface 166; and an outwardly- and rightwardly-facing frusto-conical surface 168 continuing rightwardly therefrom to join right end face 155. An annular groove extends radially into the housing right part from its inner surface 159 to receive and accommodate an O-ring 169. This O-ring is adapted to sealingly engage the male housing outer surface when the two sections are joined together. Another annular groove is shown as extending radially into housing right part 151 from surface 159. This annular groove is used with the first interlock mechanism, and as best shown in Fig. 10, is sequentially bounded by (from left to right): an inwardly and rightwardly-facing frusto-conical surface 170; an inwardly-facing horizontal cylindrical surface 171; and an inwardly- and leftwardly-facing frusto-conical surface 172. The housing right part 151 is further shown as being provided with a plurality of radial through-holes, one of which is indicated at 173, to receive and accommodate a like plurality of balls 174 of the quick-disconnect mechanism.

The female housing is formed by threading the housing right part 151 into engagement with the housing left part 18, such that the post member is captured between housing surfaces 35, 154.

Referring now to Figs. 5-10, the quick-disconnect mechanism includes balls 174, and an outermost tubular sleeve, again indicated at 76, surrounding the right marginal end portion of the assembled female housing. Here again, a spring 88 biases the sleeve member 76 to move rightwardly relative to the housing until the sleeve abuts a retaining ring 78. Sleeve member 76 is as previously described.

As shown in Figs. 5 and 10, the female seat member 145 is shown as being a horizontally-elongate tubular member having annular vertical left and right end faces 175, 176, respectively. This seat member has an inner surface which is sequentially bounded by (from left to right in Figs. 5 and 10): an inwardly-facing horizontal cylindrical surface 178 extending rightwardly from left end face 175; a leftwardly-facing annular vertical surface 179; an inwardly-facing horizontal cylindrical surface 180; a leftwardly-facing annular vertical surface 181; an inwardly-facing horizontal cylindrical surface 182; and an inwardly and leftwardly-facing spherically-segmented surface 183 continuing rightwardly therefrom to join right end face 176. The female seat member has an outer surface which sequentially includes (from left to right in Figs. 5 and 10): an outwardly-facing horizontal cylindrical surface 184 slidably engaging housing surface 156; an outwardly- and rightwardly-facing frusto-conical surface 185 arranged to move toward and away from housing surface 158; a rightwardly-facing annular vertical surface 186; an externally-threaded portion 188 continuing rightwardly therefrom; a rightwardly-facing annular vertical surface 189; an outwardly-facing horizontal cylindrical surface 190; and an outwardly- and rightwardly-facing frusto-conical surface 191 continuing therefrom to join right end face 176. An annular groove extends radially into seat member surface 184 to receive and accommodate an O-ring 192, which sealingly and slidably engages housing surface 156. Another annular groove is shown as extending into the seat member from surface 183, to receive and accommodate a suitable seal member 193, which engages the outer surface of the female valve element 146. A coil spring 194 has its left end arranged to bear against post surface 48, and has its right end arranged to bear against seat member surface 181. Spring 194 is compressed, and continuously biases the seat member to move rightwardly relative to the housing until seat member surface 185 abuts housing surface 158, as shown in Figs. 5-8 and 10.

Still referring principally to Fig. 10, the bearing member 148 is shown as being substantially the same as the bearing member 16 of the first embodiment, except that bearing member 148 is shown as having a low-friction insert, preferably formed of polytetrafluouroethylene, which engages the outer surface of valve element 146. Hence, the same reference numerals have been used to identify the same structure previously described. A coil spring 195 has its left end arranged to act against post abutment surface 153, and has its right end arranged to act against bearing member surface 110. Spring 195 is compressed, and continuously biases the bearing member to move rightwardly against the outer surface of female valve element 146.

The first interlock mechanism 149 is shown as including a link member 196, a plurality of balls, severally indicated at 198, a slide member 199, and a spring 200 arranged to act between the seat member and the slide. The link member 196 is shown as being a horizontally-elongate tubular member having annular vertical left and right end faces 201, 202, respectively, and an outwardly-facing cylindrical surface 203 extending therebetween. The inner surface of link 196 is shown as sequentially including (from left to right in Fig. 10): an internally-threaded portion 204 extending rightwardly from left end face 201; an inwardly-facing horizontal cylindrical surface 205; an inwardly- and leftwardly-facing frusto-conical surface 206; and an inwardly-facing horizontal cylindrical surface 208 continuing rightwardly therefrom to join right end face 202. A plurality of radial throughholes 209 communicate link outer surface 203 with link inner surface 208, to accommodate a like plurality of balls severally indicated at 198. Link 196 is shown as being threaded into engagement with seat member threaded portion 188 such that link left end face 201 abuts seat member surface 186.

The slide member 199 is shown as being a specially-configured tubular member having annular vertical left and right end faces 210, 211, respectively, and an inwardly-facing horizontal cylindrical surface 212 extending therebetween. The outer surface of the slide is shown as sequentially including (from left to right in Figs. 5 and 10): an outwardly-facing horizontal cylindrical surface 213 extending rightwardly from left end face 210; an outwardly- and rightwardly-facing frusto-conical surface 214; an outwardly-facing horizontal cylindrical surface 215; a leftwardly-facing annular vertical surface 216; and an outwardly-facing horizontal cylindrical surface 218 continuing rightwardly therefrom to join right end face 211. Spring 200 has its left end arranged to bear against seat member surface 189, and has its right end arranged to bear against slide member left end face 210. Spring 200 is compressed, and continuously urges the slide member 199 to move rightwardly relative to the seat member. However, when the seat member is in its extreme rightward position, as shown in Figs. 5 and 10, interlock balls 198 will engage the link throughholes and slide surface 214 to provide a limit to rightward movement of the slide relative to the seat member.

The female valve element 146 is substantially the same as the female valve element 15 of the first embodiment. Hence, the same reference numerals have been used to identify like portions and surfaces, previously described.

Structure of Male Section 143

As best shown in Fig. 5, the male section 143 is shown as broadly including a horizontally-elongate tubular housing 220, a seat member 221 slidably mounted in the housing for leftward and rightward movement therealong, a rotary valve element 222, and a bearing member 223. The male housing is shown as further including a second interlock mechanism, generally indicated at 224.

The male housing 220 is again shown as being of three-piece construction, and includes a right part 18, an intermediate post member 150, and a left part 225. The male housing right part 18 is the same as the female housing left part 18. Hence, the same reference numerals have been employed to identify the corresponding surfaces on the housing right part 18, it being understood that male housing right part 18 is arranged as a mirror image of female housing part 18. Similarly, the post member 150 of the male section is structurally identical to the post 150 of the female section, albeit arranged as a mirror image of the female post member.

The male housing left part is shown as being a horizontally-elongate specially-configured tubular member having annular vertical left and right end faces 226, 228, respectively. The inner surface of male housing left part 225 sequentially includes (from left to right in Fig. 5): an inwardly and leftwardly-facing frusto-conical surface 229; an inwardly-facing horizontal cylindrical surface 230; an inwardly- and rightwardly-facing frusto-conical surface 231; an inwardly-facing horizontal cylindrical surface 232; an inwardly and rightwardly-facing frusto-conical surface 233; and an inwardly-facing horizontal cylindrical surface 234 continuing rightwardly therefrom to join right end face 228. The outer surface of the male housing left part sequentially includes (from left to right in Fig. 5): an outwardly- and leftwardly-facing frusto-conical surface 235 extending rightwardly from left end face 226; an outwardly-facing horizontal cylindrical surface 236; an outwardly- and leftwardly-facing frusto-conical surface 238; a leftwardly-facing annular vertical surface 239; an outwardly- and leftwardly-facing frusto-conical surface 240; an outwardly-facing horizontal cylindrical surface 241; a rightwardly-facing annular vertical surface 242; an outwardly-facing horizontal cylindrical surface 243; and an externally-threaded portion 244 continuing rightwardly therefrom to join right end face 228. Adjacent its left end, an annular groove is shown as extending radially into the housing left part from inner surface 230 to receive and accommodate an O-ring 245, which sealingly engages female seat member surface 190 when the male and female sections are joined together. Another annular groove extends radially into the male housing left part from surface 230 to receive and accommodate another O-ring 246, which sealingly engages the male seat member. Still another annular groove 248 extends radially into the male housing from outer surface 236, to be aligned with quick-disconnect balls 174 when the two sections are joined together, as shown in Fig. 9. The male housing right part is assembled, as shown, such that the post member is captured between surfaces 35, 228.

The second interlock mechanism 224 is shown, in pertinent part, as including a plurality of radial through-holes, severally indicated at 249, which communicate housing inner surface 232 with housing outer surface 236, and a like plurality of balls, severally indicated at 250, arranged in these through-holes.

The male seat member 221 is shown as being a specially-configured horizontally-elongate tubular member having annular vertical left and right end faces 251, 252, respectively. The outer surface of male seat member 221 sequentially includes (from left to right in Fig. 5): an outwardly- and leftwardly-facing frusto-conical surface 253 extending rightwardly from left end face 251; an outwardly-facing horizontal cylindrical surface 254; an outwardly- and leftwardly-facing frusto-conical surface 255 arranged to move toward and away from facing housing surface 231; an outwardly-facing horizontal cylindrical surface 256; an outwardly- and leftwardly-facing frusto-conical surface 258 arranged to move toward and away from housing surface 233; and an outwardly-facing horizontal cylindrical surface 259 continuing rightwardly therefrom to join right end face 252. Seat member surfaces 254, 256, 259 are arranged to slidably engage housing surfaces 230, 232, 234, respectively. The inner surface of the male seat member sequentially includes (from right to left in Fig. 5): an inwardly-facing horizontal cylindrical surface 260 extending leftwardly from right end face 252; a rightwardly-facing annular vertical surface 261; an inwardly-facing horizontal cylindrical surface 262; a rightwardly-facing annular vertical surface 263; an inwardly-facing horizontal cylindrical surface 264; and an inwardly- and rightwardly-facing spherically-segmented surface 265 continuing rightwardly therefrom to join left end face 251. An annular groove is shown as extending radially into the seat member from outer surface 259 to receive and accommodate an O-ring 266, which sealingly engages housing surface 234. Another annular groove extends into the seat member from spherically-segmented surface 265 to receive and accommodate a seal member 268 which engages the outer surface male valve element 222.

A coil spring, again indicated at 194, is arranged to act between post surface 48 and seat member surface 263. Spring 194 which may be identical to the correspondingly-numbered spring of the female section, is arranged to continuously urge the seat member to move leftwardly relative to the male housing.

The bearing member 223 of the male section is substantially equivalent to the bearing member 148 of the female section, albeit arranged as a mirror image of the latter. A coil spring 195 is arranged to act between the post flange and the bearing member. Specifically, spring 195, which may be identical to the correspondingly-numbered spring of the female section, has its right end arranged to act against post member flange surface 153, and has its left end arranged to act against bearing member surface 110, and continuously urges the bearing member to move leftwardly into engagement with the outer surface of male valve element 222.

The male valve element 222 is substantially the same as the female valve element 146, except that recess 102 has been eliminated. The male valve element is otherwise shown as being arranged as a mirror image of the female valve element.

Operation of Second Embodiment

The operation of the second embodiment is comparatively illustrated in Figs. 6-9.

Again assume that the male and female coupling sections are initially separated, as shown in Fig. 5. Thereafter, the male section 143 may be moved axially leftwardly to initially engage the female section, as shown in Fig. 6. In this position, the left margin of male housing inner surface 230 will surround the right margin of female seat member surface 190, and O-ring 245 will seal the joint between the male housing and the female seat member. At the same time, O-ring 169 seals the sliding joint between the male and female housings. In the position shown in Fig. 6, which represents a first relative position of the male and female housings, the male seat member remains in its leftwardmost position relative to the male housing, and, conversely, the female seat member is still in its rightwardmost position relative to the female housing. It should also be noted that the convex portion of male valve element 222 is received in the rightwardly-facing concave recess 102 provided in the female valve element 146. Hence, both of the valve elements are in their flow-preventing positions.

Assume now that the male section is further inserted axially into the female section, to the position shown in Fig. 7. The quick-disconnect sleeve member 76 is shown as having been shifted leftwardly relative to the female housing to permit balls 174 to move radially outwardly. During such insertion, the female seat member has been restrained from axial movement relative to the female housing by first interlock balls 198, which are wedged between interlock link surface 209 and female housing groove surface 170. Hence, the female seat member can not move axially leftwardly relative to the female housing, and the female valve element remains in its flow-preventing position. However, because the male seat member left end face 251 engaged the temporarily-restrained right end face of female seat member 145, such axial insertion of the male section has produced rightward displacement of the male seat member relative to the male housing. Such axial motion of the male seat member relative to the male housing has caused a corresponding angular rotation of the male valve element toward its flow-permitting position. However, in Fig. 7, the male valve element has not yet reached its flow-permitting position, and male seat member right end face 252 remains horizontally spaced from male post surface 48. At the same time, the leftward end face 226 of the male housing is shown as having just abutted the right end face 211 of the first interlock slide. First interlock balls 198 remained wedged between interlock surface 209 and female housing surface 170. However, the several balls 250 of the second interlock mechanism are shown as ready to move radially inwardly upon further axial movement of the male seat member relative to the male housing.

Assume now that the male housing is further inserted into the female housing, to the second relative position therebetween shown in Fig. 8. Such additional displacement has caused the male seat member to move further rightwardly relative to the male housing, until the right end face 252 of the male seat member abuts post surface 48. Second interlock balls 250 are now free to move radially inwardly to engage male seat member surface 254. At the same time, such further leftward movement of the male housing relative to the female housing, has displaced the interlock slide 199 leftwardly relative to the female seat member, and first interlock ball 198 have now moved radially inwardly to engage interlock slide surface 215. It should also be noted that the male valve element has now completed its rotation to its flow-permitting position, and is restrained from further rotation because male seat member surface 252 now abuts post surface 48. However, such further leftward movement of the male housing relative to the female housing has permitted first interlock balls 198 to move radially inwardly, thereby freeing the female seat member to move axially relative to the female housing. However, in Fig. 8 such motion of the female seat member relative to the female housing has not yet occurred. Thus, when the male and female housings are in the second relative position shown in Fig. 8, the male valve element has completed its clockwise rotation to its flow-permitting position, while the female valve element remains in its flow-preventing position.

With the female seat member now free to move relative to the female housing, the male section-may be still further inserted into the female section, to the position shown in Fig. 9. Since the male seat member end face 252 abutted post surface 48 in Fig. 8, such further insertion of the male member causes the now-unrestrained female seat member to move leftwardly relative to its housing. Such relative axial movement between the female valve element and the female housing, causes the female valve element to rotate counterclockwise to its flow-permitting position, aligned with the male valve element. This represents a third relative position between the male and female housings. After the male and female housings are in the position shown in Fig. 9, quick-disconnect sleeve 76 may be released. Spring 88 will then drive this sleeve member rightwardly, forcing quick-disconnect balls 174 to move radially inwardly into locking engagement with male housing groove 248.

To separate the connected male and female coupling sections, the above-described operation is simply reversed. Specifically, referring to Fig. 9, the quick-disconnect sleeve 76 is first moved leftwardly, so as to allow quick-disconnect balls 174 to move radially outwardly against sleeve surface 85. Thereafter, the malesection may be withdrawn rightwardly (i.e., axially) from the female section. However, during such initial rightward motion, the male seat member 221 is restrained from axial motion relative to the male housing because second interlock balls 250 are wedged between male housing surface 249, male seat member surface 255, and female housing surface 159. Hence, as the male section is initially withdrawn from the female section, the male valve element remains in its flow-permitting position, and expanding female spring 194 causes the female valve element to move rightwardly relative to the female housing. As such motion continues until the female valve element rotates clockwise from its flow-permitting position (as shown in Fig. 9) back to its flow-preventing position (as shown in Fig. 8).

If the male section is now further withdrawn from the female section, first interlock inclined surface 214 will drive balls 198 radially outwardly into the female housing recess defined by surfaces 170-172. At the same time, male seat member surface 255 will drive second interlock balls radially outwardly. Hence, the female seat member will be locked to the female housing, and the male seat member will be free to move relative to the male housing.

Thus, if the male section is still further withdrawn from the female section, the male seat member may move leftwardly relative to the male housing. This causes the male valve element to rotate counterclockwise toward its flow-preventing position relative to the male housing.

Thereafter, the male section may be further withdrawn from the female section, to the position shown in Fig. 6. During such further withdrawal, expanding male spring 194 has caused the male seat member to move leftwardly relative to the male housing, and has caused the male valve element to continue its rotation to its flow-preventing position. Thereafter, the male section may, be simply withdrawn and separated from the female section, as shown in Fig. 5.

Modifications

The shape and configuration of the male and female housings may be readily changed or modified, as desired. The same is true of the valve elements. Other types of valve elements may be substituted for the specific forms shown. Moreover, while a type of a lost-motion eccentric connection is shown between the valve elements and the seat members, this too may be readily changed or modified, all as desired. The particular seals, both as to type and placement, are not deemed critical to the fundamental operation of the invention. Such seals may be of any type, and placed where desired, so as to cause effective sealing between the various relatively-movable parts. In some forms, the bearing members might be eliminated altogether. In the first embodiment, the sequence of valve element rotation is produced by the differential force exerted by springs 113, 140. However, in the second embodiment, male and female springs 194, 194 are identical, and the operation of this second embodiment does not depend upon such differential spring force. Rather, the proper sequence of valve rotation is caused by the first and second interlock mechanisms of the second embodiment. Moreover, while the two preferred embodiments are shown as being of the quick-disconnect type, such connection may be of other types as well.

## Claims

1. A fluid coupling device comprising:
a first section (11; 142) having a first housing (13; 144) and a first valve element (15; 146) mounted within said first housing so that the first valve element is rotatable between a flow-preventing position and a flow-permitting position;
a second section (12; 143) having a second housing (114; 220) and a second valve element (116; 222) mounted within said second housing so that the second valve element is rotatable between a flow-preventing position and a flow-permitting position;
said first valve element (15; 146) having a recess (102) which is arranged to receive a portion of the second valve element (116; 222) when said first and second valve elements are in their flow-preventing positions and said first and second sections are moved linearly into engagement with each other;
means (103, 104) for rotating said first and second valve elements to their flow-permitting positions to establish a full flow passage through said device as said first and second sections are moved to a fully coupled position; and means (113, 140; 149, 224) for ensuring that said second valve element rotates to its flow-permitting position before said first valve element;
characterized in that said first valve element (15; 146) is movable linearly relative to said first housing (13; 144) and co-operates therewith so that said first valve element is rotated by said relative linear movement, said first valve element being biased towards its flow-preventing position by a first spring (113; 194, 195) acting between said first housing and said first valve element;
said second valve element (116; 222) is movable linearly relative to said second housing (114; 220) and co-operates therewith so that said second valve element is rotated by said relative linear movement, said second valve element being biased towards its flow-preventing position by a second spring (140; 194, 195) acting between said second housing and said second valve element;
and said first and second sections (11, 12; 142, 143) are movable linearly to the fully coupled position through successive first, second, and third relative positions of said first and second housings, wherein said first and second valve elements are in engagement with each other in their flow-preventing positions in said first relative position of said housings, said second valve element (116; 222) is rotated to its flow-permitting position upon movement of said sections to the second relative position of said housings, and the first valve element (15; 146) is rotated to its flow-permitting position upon movement of said sections to the third relative position of said housings.

2. A fluid coupling device according to claim 1, wherein said first valve element (15; 146) has a through-bore (y-y).

3. A fluid coupling device according to claim 2, wherein said first housing (13; 144) has an axis (x-x), and wherein said first valve element through-bore (y-y) is substantially aligned with said first housing axis when said first valve element (15: 146) is in its flow-permitting position.

4. A fluid coupling device according to any one of the preceding claims, wherein said first valve element (15; 146) has a center (c), and wherein said first valve element is mounted for rotation about its center.

5. A fluid coupling device according to any one of the preceding claims, wherein said second valve element (116; 222) has a through-bore (y-y).

6. A fluid coupling device according to claim 5, wherein said second housing (114; 220) has an axis (x-x), and wherein said second valve element through-bore (y-y) is substantially aligned with said second housing axis when said second-valve element (116; 222) is in its flow-permitting position.

7. A fluid coupling device according to any one of the preceding claims, wherein said second valve element (116; 222) has a center (c), and wherein said second valve element is mounted for rotation about its center.

8. A fluid coupling device according to claim 1, wherein each of said housings (13, 114; 144, 220) has an axis (x-x), and wherein one of said housings is movable axially relative to the other of said housings when said sections (11, 12; 142, 143) are moved from said first to said third relative positions of said housings.

9. A fluid coupling device according to claim 8, wherein each of said first and second springs (113, 140; 194, 195) acts on its associated valve element in an axial direction to bias it towards the other valve element.

10. A fluid coupling device according to any one of the preceding claims, wherein the force exerted by the first spring (113) acting on said first valve element (15) is substantially greater than the force exerted by the second spring (140) acting on said second valve element (116) whereby said first and second springs constitute said means for ensuring that said second valve element rotates to its flow-permitting position before said first valve element.

11. A fluid coupling device according to any one of. claims 1 to 9, wherein said means for ensuring that said second valve element (222) rotates to its flow-permitting position before said first valve element (146) comprises a first interlock mechanism (149) for preventing said first valve element from rotating when said sections (142, 143) are moved from said first relative position of said housings (144, 220) to said second relative position.

12. A fluid coupling device according to claim 11, further comprising a second interlock mechanism (250) for preventing said second valve element (222) from rotating when said sections (142, 143) are moved from said third relative position of said housings (144, 220) to said second relative position.

13. A fluid coupling device according to claim 11 or claim 12, wherein the force exerted by said first spring (194, 195) on said first valve element (146) is substantially equal to the force exerted by said second spring (194, 195) on said second valve element (222).

14. A fluid coupling device according to any one of the preceding claims, further comprising a connector (76) for selectively preventing said sections (11, 12; 142, 143) from separating when said housings (13, 114; 144, 220) are in said third relative position.

15. A fluid coupling device according to any one of the preceding claims, wherein the portion of the second valve element (116; 222) which is received in the recess (102) of said first valve element (15; 146) is configured complimentarily to the shape of said recess (102).

16. A fluid coupling device according to claim 15, wherein said recess (102) of the first valve element (15; 146) has a concave surface, and said second valve element (116; 222) has a convex surface portion arranged to be received in said recess (102) in closely-spaced facing relation to the concave surface of the recess when said housings (13, 114; 144, 220) are in said first relative position to as to minimize the volume of fluid trapped between said first and second sections (11, 12; 142, 143).

**Patentansprüche**

1. Kopplungsvorrichtung für Flüssigkeiten mit: einem ersten Abschnitt (11; 142) mit einem ersten Gehäuse (13; 144) und einem ersten Ventil (15; 146), das in das erste Gehäuse montiert ist, so daß das erste Ventil zwischen einer Durchfluß-Sperrstellung und einer Durchflußstellung drehbar ist;

einem zweiten Abschnitt (12; 143) mit einem zweiten Gehäuse (114; 220) und einem zweiten Ventil (116; 222), das in das zweite Gehäuse montiert ist, so daß das zweite Ventil zwischen einer Durchfluß-Sperrstellung und einer Durchflußstellung drehbar ist,

wobei das erste Ventil (15; 146) eine Kerbe (102) besitzt, die angeordnet ist, einen Teil des zweiten Ventils (116; 222) aufzunehmen, wenn das erste und das zweite Ventil in ihrer Durchfluß-Sperrstellung sind und die ersten und zweiten Abschnitte linear zu einer Verbindung miteinander bewegt worden sind;

einer Vorrichtung (103, 104) zum Drehen des ersten und zweiten Ventils in ihre Durchflußstellungen, um einen vollen Durchfluß durch das Gerät zu ermöglichen, sobald die ersten und zweiten Abschnitte in eine vollständig verbundene Stellung bewegt worden sind; und einer Vorrichtung (113, 140; 149, 224) zum Sicherstellen, daß das zweite Ventil sich vor dem ersten Ventil in seine Durchflußstellung dreht, dadurch gekennzeichnet, daß das erste Ventil (15; 146) linear bezüglich des ersten Gehäuses (15; 146) beweglich ist und mit diesem zusammenwirkt, so daß das erste Ventil durch diese relative lineare Bewegung gedreht wird, wobei das erste Ventil durch eine Feder (113; 194, 195), die zwischen dem ersten Gehäuse und dem ersten Ventil wirkt, in seine Durchfluß-Sperrstellung voreingestellt ist;

das zweite Ventil (116; 222) linear bezüglich des ersten Gehäuses (114; 220) beweglich ist und mit diesem zusammenwirkt, so daß das zweite Ventil durch diese relative lineare Bewegung gedreht wird, wobei das zweite Ventil durch eine Feder (140; 194, 195), die zwischen dem zweiten Gehäuse und dem zweiten Ventil wirkt, in seine Durchfluß-Sperrstellung voreingestellt ist;

und daß der erste und zweite Abschnitt (11, 12; 142, 143) linear beweglich sind bis zu einer vollständig verbundenen Stellung durch sukzessive eine erste, zweite und dritte relative Stellung des ersten und zweiten Gehäuses, wobei das erste und zweite Ventil in der ersten relativen Stellung der Gehäuse miteinander in ihrer Durchfluß-Sperrstellung verbunden sind, das zweite Ventil (116; 222) in seine Durchflußstellung gedreht wird bei der Bewegung der Abschnitte in die zweite relative Stellung der Gehäuse und wobei das erste Ventil (15; 146) in seine Durchflußstellung gedreht wird bei der Bewegung der Abschnitte in die dritte relative Stellung der Gehäuse.

2. Kopplungsvorrichtung für Flüssigkeiten nach Anspruch 1, wobei das erste Ventil (15; 146) eine Durchbohrung (y-y) besitzt.

3. Kopplungsvorrichtung für Flüssigkeiten nach Anspruch 2, wobei das erste Gehäuse (13; 144) eine Achse (x-x) besitzt und wobei die Durchbohrung (y-y) des ersten Ventils mit der Achse des ersten Gehäuses im wesentlichen fluchtet, wenn das erste Ventil (15; 146) in seiner Durchflußstellung ist.

4. Kopplungsvorrichtung für Flüssigkeiten nach einem der vorhergehenden Ansprüche, wobei das erste Ventil (15; 146) einen Mittelpunkt (c) besitzt und wobei das erste Ventil für Drehbewegungen um diesen Mittelpunkt montiert ist.

5. Kopplungsvorrichtung für Flüssigkeiten nach einem der vorhergehenden Ansprüche, wobei das zweite Ventil (116; 222) eine Durchbohrung (y-y) besitzt.

6. Kopplungsvorrichtung für Flüssigkeiten nach Anspruch 5, wobei das zweite Gehäuse (114; 220) eine Achse (x-x) besitzt und wobei die Durchbohrung (y-y) des zweiten Ventils mit der Achse des zweiten Gehäuses im wesentlichen fluchtet, wenn das zweite Ventil (116; 222) in seiner Durchflußstellung ist.

7. Kopplungsvorrichtung für Flüssigkeiten nach einem der vorhergehenden Ansprüche, wobei das zweite Ventil (116; 222) einen Mittelpunkt (c) besitzt und wobei das zweite Ventil für Drehbewegungen um diesen Mittelpunkt montiert ist.

8. Kopplungsvorrichtung für Flüssigkeiten nach Anspruch 1, wobel ledes der Gehäuse (13, 114; 144, 220) eine Achse (x-x) besitzt und wobei eines der Gehäuse axial beweglich bezüglich des anderen Gehäuses ist, wenn die Abschnitte (11, 12; 142, 143) von der ersten in die dritte relative Stellung der Gehäuse bewegt worden sind.

9. Kopplungsvorrichtung für Flüssigkeiten nach Anspruch 8, wobei jede der ersten und zweiten Feder (113, 140; 194, 195) auf das mit ihr verbundene Ventil in eine axiale Richtung wirkt, um es in Richtung des anderen Ventils voreinzustellen.

10. Kopplungsvorrichtung für Flüssigkeiten nach einem der vorhergehenden Ansprüche, wobei die von der ersten, auf das erste Ventil (15) wirkenden Feder (113) ausgeübte Kraft im wesentlichen größer ist als die von der zweiten, auf das zweite Ventil (116) wirkenden Feder (140) ausgeübte Kraft, wobei, die erste und zweite Feder die Vorrichtung zum Sicherstellen, daß das zweite Ventil sich vor den ersten Ventil in seine Durchflußstellung dreht, bilden.

11. Kopplungsvorrichtung für Flüssigkeiten nach einem der Ansprüche 1 bis 9, wobei die Vorrichtung zum Sicherstellen, daß das zweite Ventil (222) sich vor dem ersten Ventil (146) in seine Durchflußrichtung dreht, einen ersten Verriegelungsmechanismus (149) aufweist, zum Verhindern, daß das erste Ventil sich dreht, wenn die Abschnitte (142, 143) von der ersten relativen Stellung der Gehäuse (144, 220) in die dritte relative Stellung der Gehäuse bewegt worden sind.

12. Kopplungsvorrichtung für Flüssigkeiten nach Anspruch 11, die weiterhin einen zweiten Verrigelungsmechanismus (250) aufweist, zum Verhindern, daß das zweite Ventil (222) sich dreht, wenn die Abschnitte (142, 143) von der dritten relativen Stellung der Gehäuse (144, 220) in die zweite relative Stellung bewegt worden sind.

13. Kopplungsvorrichtung für Flüssigkeiten nach Anspruch 11 oder 12, wobei die von der ersten Feder (194, 195) auf das erste Ventil (146) ausgeübte Kraft im wesentlichen gleich der von der zweiten Feder (194, 195) auf das zweite Ventil (222) ausgeübten Kraft ist.

14. Kopplungsvorrichtung für Flüssigkeiten nach einem der vorhergehenden Ansprüche, die weiterhin eine Verbindung (76) aufweist, die selektiv verhindert, daß sich die Abschnitte (11, 12; 142, 143) trennen, wenn sich die Gehäuse (13, 114; 144, 220) in der dritten relativen Stellung befinden.

15. Kopplungsvorrichtung für Flüssigkeiten nach einem der vorhergehenden Ansprüche, wobei der Teil des zweiten Ventils (116; 222), der in die Kerbe aufgenommen ist, komplementär zur Form dieser Kerbe (102) ausgeführt ist.

16. Kopplungsvorrichtung für Flüssigkeiten nach Anspruch 15, wobei die Kerbe (102) des ersten Ventils (15; 146) eine konkave Oberfläche besitzt und das zweite Ventil (116; 222) einen konvexen Oberflächenteil besitzt, der so angeordnet ist, das er in enger, der konkaven Oberfläche der Kerbe gegenüberliegender Verbindung in die Kerbe (102) aufgenommen wird, wenn die Gehäuse (13, 114; 144, 220) in der ersten relativen Stellung sind, um das Volumen der zwischen der ersten und zweiten Abschnitt (11, 12; 142, 143) eingefangenen Flüssigkeit zu minimieren.

**Revendications**

1. Raccord pour fluide, comprenant un premier tronçon (11; 142) ayant un premier boîtier (13; 144) et un premier élément d'obturation (15; 146) monté dans le premier boîtier afin que le premier élément d'obturation puisse tourner entre une position empêchant une circulation et une position la permettant,

un second tronçon (12; 143) ayant un second boîtier (114; 220) et un second élément d'obturation (116; 222) monté dans le second boîtier afin que le second élément d'obturation puisse tourner entre une position empêchant la circulation et une position la permettant,

le premier élément d'obturation (15; 146) ayant une cavité (102) destinée à loger une partie du second élément d'obturation (116; 222) lorsque le premier et le second élément d'obturation sont dans leur position empêchant la circulation et le premier et le second tronçon sont déplacés linéairement en contact mutuel,

un dispositif (103, 104) destiné à faire tourner le premier et le second élément d'obturation vers leur position permettant la circulation afin qu'un passage de circulation libre soit établi dans le raccord lorsque le premier et le second tronçon sont déplacés vers une position d'accouplement maximal, et

un dispositif (113, 140; 149; 224) destiné à assurer la rotation du second élément d'obturation vers sa position permettant la circulation avant le premier élément d'obturation,

caractérisé en ce que le premier élément d'obturation (15; 146) est mobile linéairement par rapport au premier boîtier (13; 144) et coopère avec lui de manière que le premier élément d'obturation tourne sous la commande du déplacement linéaire relatif, le premier élément d'obturation étant rappelé vers sa position empêchant la circulation par un premier ressort (113; 194, 195) agissant entre le premier boîtier et le premier élément d'obturation,

le second élément d'obturation (116; 222) est mobile linéairement par rapport au second boîtier (114; 220) et coopère avec lui afin que le second élément d'obturation tourne à la suite du déplacement linéaire relatif, le second élément d'obturation étant rappelé vers sa position empêchant la circulation par un second ressort (140; 194, 195) agissant entre le second boîtier et le second élément d'obturation, et

le premier et le second tronçon (11, 12; 142, 143) sont mobiles linéairement vers la position d'accouplement maximale par passage à une première, une seconde et une troisième position relatives du premier et du second boîtier, ces positions étant successives, le premier et le second élément d'obturation étant en contact mutuel dans leur position empêchant la circulation dans la première position relative du boîtier, le second élément d'obturation (116; 222) ayant tourné vers sa position permettant la circulation lors du déplacement des tronçons vers la seconde position relative des boîtiers, et le premier élément d'obturation (15; 146) ayant tourné vers sa position permettant la circulation après déplacement des tronçons vers la troisième position relative des boîtiers.

2. Raccord pour fluide selon la revendication 1, dans lequel le premier élément d'obturation (15; 146) a un trou débouchant (y-y).

3. Raccord pour fluide selon la revendication 2, dans lequel le premier boîtier (13; 144) a un axe (x-x) et dans lequel le trou débouchant (y-y) du premier élément d'obturation est pratiquement aligné sur l'axe du premier boîtier lorsque le premier élément d'obturation (15; 146) est dans sa position permettant la circulation.

4. Raccord pour fluide selon l'une quelconque des revendications précédentes, dans lequel le premier élément d'obturation (15; 146) a un centre (c), et le premier élément d'obturation est monté afin qu'il tourne autour de son centre.

5. Raccord pour fluide selon l'une quelconque des revendications précédentes, dans lequel le second élément d'obturation (116; 222) a un trou débouchant (y-y).

6. Raccord pour fluide selon la revendication 5, dans lequel le second boîtier (114; 220) a un axe (x-x), et dans lequel le trou débouchant (y-y) du second élément d'obturation est pratiquement aligné sur l'axe du second boîtier lorsque le second élément d'obturation (116; 222) est dans sa position permettant la circulation.

7. Raccord pour fluide selon l'une quelconque des revendications précédentes, dans lequel le second élément d'obturation (116; 222) a un centre (c), et dans lequel le second élément d'obturation est monté afin qu'il puisse tourner autour de son centre.

8. Raccord pour fluide selon la revendication 1, dans lequel chacun des boîtiers (13, 114; 144, 220) a un axe (x-x), et dans lequel l'un des boîtiers est mobile axialement par rapport à l'autre des boîtiers lorsque les tronçons (11, 12; 142, 143) sont déplacés de la première position relative des boîtiers vers la troisième.

9. Raccord pour fluide selon la revendication 8, dans lequel chacun des premier et second ressorts (113, 140; 194, 195) agit sur l'élément associé d'obturation en direction axiale afin qu'il soit rappelé vers l'autre élément d'obturation.

10. Raccord pour fluide selon l'une quelconque des revendications précédentes, dans lequel la force appliquée par le premier ressort (113) agissant sur le premier élément d'obturation (15) est nettement supérieure à la force appliquée par le second ressort (140) agissant sur le second élément d'obturation (116), si bien que le premier et le second ressort constituent le dispositif assurant la rotation du second élément d'obturation vers sa position permettant la circulation avant la rotation du premier élément d'obturation.

11. Raccord pour fluide selon l'une quelconque des revendications 1 à 9, dans lequel le dispositif destiné à assurer la rotation du second élément d'obturation (222) vers sa position permettant la circulation avant la rotation du premier élément d'obturation (146) comporte un premier mécanisme (149) de coopération par emboîtement destiné à empêcher la rotation du premier élément d'obturation lorsque les tronçons (142, 143) sont déplacés de la première position relative des boîtiers (144, 220) vers la seconde position relative.

12. Raccord pour fluide selon la revendication 11, comprenant en outre un second mécanisme (250) de coopération par emboîtement destiné à empêcher la rotation du second élément d'obturation (222) lorsque lesdits tronçons (142, 143) sont déplacés de la troisième position relative des boîtiers (144, 220) vers la seconde position relative.

13. Raccord pour fluide selon la revendication 11 ou 12, dans lequel la force appliquée par le premier ressort (194, 195) sur le premier élément d'obturation (146) est pratiquement égale à la force appliquée par le second ressort (194, 195) sur le second élément d'obturation (222).

14. Raccord pour fluide selon l'une quelconque des revendications précédentes, comprenant en outre un connecteur (76) destiné à empêcher sélectivement la séparation, des tronçons (11, 12; 142, 143) lorsque les boîtiers (13, 114; 144, 220) sont dans leur troisième position relative.

15. Raccord pour fluide selon l'une quelconque des revendications précédentes, dans lequel la partie du second élément d'obturation (116, 222) qui se loge dans la cavité (102) du premier élément d'obturation (15; 146) a une configuration complémentaire de celle de la cavité (102).

16. Raccord pour fluide selon la revendication 15, dans lequel la cavité (102) du premier élément d'obturation (15; 146) a une surface concave, et le second élément d'obturation (116; 222) a une partie de surface convexe destinée à se loger dans la cavité (102) en face de la surface concave de la cavité et très près de celle-ci lorsque les boîtiers (13, 114; 144, 220) sont dans leur première position relative afin que le volume de fluide piégé entre le premier et le second tronçon (11, 12; 142, 143) soit minimal.

Fig. 1.

Fig. 2.

Fig. 3.

Fig. 4.

# Fig. 5.

Fig. 6.

Fig. 7.

Fig. 8.

# Fig. 9.

# Fig. 10.